# EUROPÄISCHE PATENTANMELDUNG

(11) **EP 3 042 882 A1**
(43) Veröffentlichungstag der Anmeldung: **13.07.2016**
(21) Anmeldenummer: 15150841.3
(22) Anmeldetag: 12.01.2015
(51) Int. Cl.: C03B 33/027, C03B 33/03, C03B 33/033, B65G 49/06

(54) **BEARBEITUNGSTISCH UND VERFAHREN ZUM BEARBEITEN VON GLASSCHEIBEN**

(71) Anmelder: Bystronic Maschinen AG, 4922 Bützberg (CH)
(72) Erfinder: Stapf, Alexander, 4922 Bützberg (CH)
(74) Vertreter: AMMANN PATENTANWÄLTE AG BERN

(57) **Zusammenfassung**

Der Bearbeitungstisch zum Bearbeiten von Glasscheiben (80, 81) umfasst eine erste und zweite Bearbeitungsstation (10, 20), eine erste, zweite und dritte Brücke (40, 50, 60) sowie Führungen (31, 32), welche sich von der ersten zur zweiten Bearbeitungsstation (10, 20) erstrecken und entlang welchen die Brücken (40, 50, 60) verfahrbar sind. An der ersten und zweiten Brücke ist jeweils mindestens ein Werkzeug (45, 65, 66) angeordnet zur Bearbeitung einer Glasscheibe an der ersten bzw. zweiten Bearbeitungsstation. Die dritte verfahrbare Brücke (50) ist zwischen der ersten und zweiten Brücke (40, 60) angeordnet und dient zum Transport einer Glasscheibe (80, 81) von der ersten zur zweiten Bearbeitungsstation.

## Beschreibung

Die Erfindung bezieht sich auf einen Bearbeitungstisch zum Bearbeiten von Glasscheiben gemäss Oberbegriff des Anspruchs 1.

Das Bearbeiten von Glasscheiben umfasst z. B. das Ritzen und Brechen, um so eine Scheibe mit der gewünschten Form zu erhalten. Derartige Scheiben werden beispielsweise in Automobilen verwendet. Durch das Vorsehen mehrerer Bearbeitungsstationen können Bearbeitungsschritte zeitlich aufeinander abgestimmt durchgeführt und so der Bearbeitungsprozess beschleunigt werden.

Aus der CH 626 596 der gleichen Anmelderin ist eine Anlage bekannt, bei welcher pro Bearbeitungsschritt ein Bearbeitungstisch vorgesehen ist. Die Bearbeitungstische sind getrennt voneinander angeordnet. Dies macht den Aufbau relativ kompliziert und erschwert den Ablauf, da die genaue Position einer Glasscheibe bei deren Durchlauf durch die Anlage wiederkehrend erfasst werden muss.

Aus der EP 1 647 534 A1 der gleichen Anmelderin ist eine Anlage mit einem integrierten Bearbeitungstisch bekannt, der eine Schneidstation und eine Brechstation aufweist. An der jeweiligen Station ist ein Werkzeug vorgesehen, welches an einer verfahrbaren Brücke angeordnet ist. Die beiden Brücken sind quer zueinander verfahbar angeordnet und weisen entsprechend separate Führungen auf. Dadurch wird der Aufbau relativ kompliziert. Im Weiteren erstreckt sich eine der Führungen quer über den Bearbeitungstisch, was einen seitlichen Zugang zu den Bearbeitungsstationen erschwert. Ausgehend von diesem Stand der Technik ist es eine Aufgabe der vorliegenden Erfindung, einen Bearbeitungstisch mit einfacherem Aufbau anzugeben.

Diese Aufgabe wird durch den erfindungsgemässen Bearbeitungstisch gemäss Anspruch 1 gelöst. Die weiteren Ansprüche geben bevorzugte Ausführungen sowie ein Verfahren an, in welchem ein Bearbeitungstisch verwendet wird.

Der Bearbeitungstisch gemäss der Erfindung hat u. a. den Vorteil, dass dieselben Führungen zum Verfahren der Brücken verwendbar sind. Dadurch ist der Aufbau vereinfacht und ein Zugang zu den Bearbeitungsstationen erleichtert. Eine zusätzliche Brücke unterstützt den Transport einer Glasscheibe zwischen den Bearbeitungsstationen.

Die Erfindung wird im Folgenden anhand eines Ausführungsbeispiels unter Bezugnahme auf Figuren erläutert. Es zeigen:
Fig. 1 eine perspektivische Ansicht eines erfindungsgemässen Bearbeitungstisches;
Fig. 2 eine Draufsicht des Bearbeitungstisches gemäss Fig. 1;
Fig. 3 eine Seitenansicht des Bearbeitungstisches gemäss Fig. 1;
Fig. 4 eine Vorderansicht des Bearbeitungstisches gemäss Fig. 1, und
Fig. 5 eine Detailansicht von Führung und Schlitten einer Brücke.

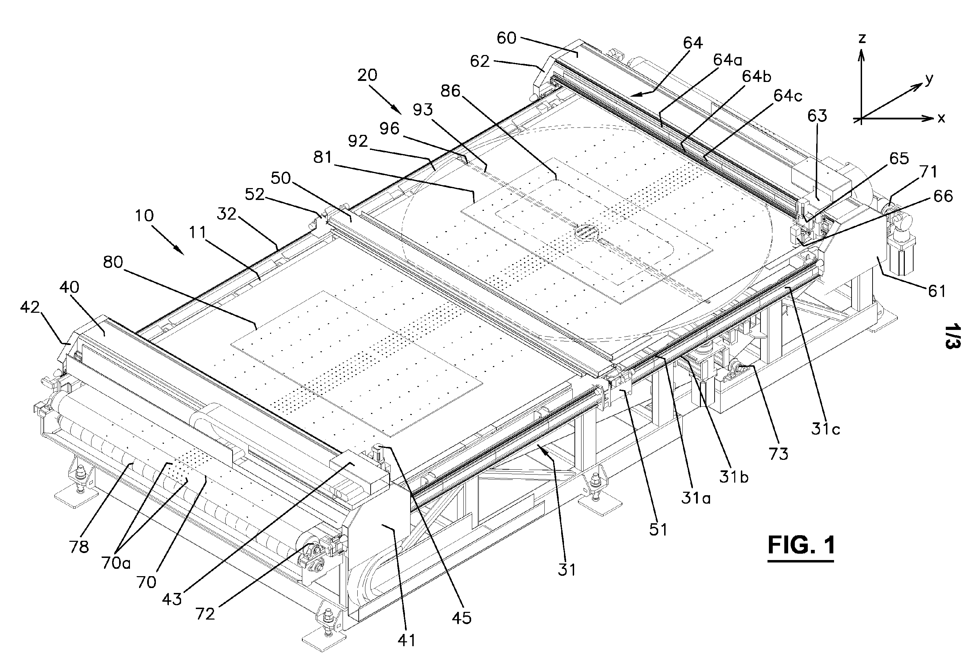

Der in den Figuren 1 bis 4 dargestellte Bearbeitungstisch ist als Rahmenkonstruktion ausgestaltet, an welchem die einzelnen Funktionsteile angeordnet sind. Hier umfasst der Bearbeitungstisch eine erste Bearbeitungsstation 10, eine zweite Bearbeitungsstation 20 und eine Führungseinrichtung 31, 32 für verfahrbare Brücken 40, 50, 60.

Die Führungseinrichtung 31, 32, welche als Linearführung ausgebildet ist, erstreckt sich in der y-Richtung von der ersten, 10, zur zweiten Bearbeitungsstation 20. Sie umfasst eine erste Führungsbahn 31 und eine zweite Führungsbahn 32, die parallel zueinander entlang den Längsseiten des Bearbeitungstisches verlaufen und die als Führung für die Brücken 40, 50, 60 dienen.

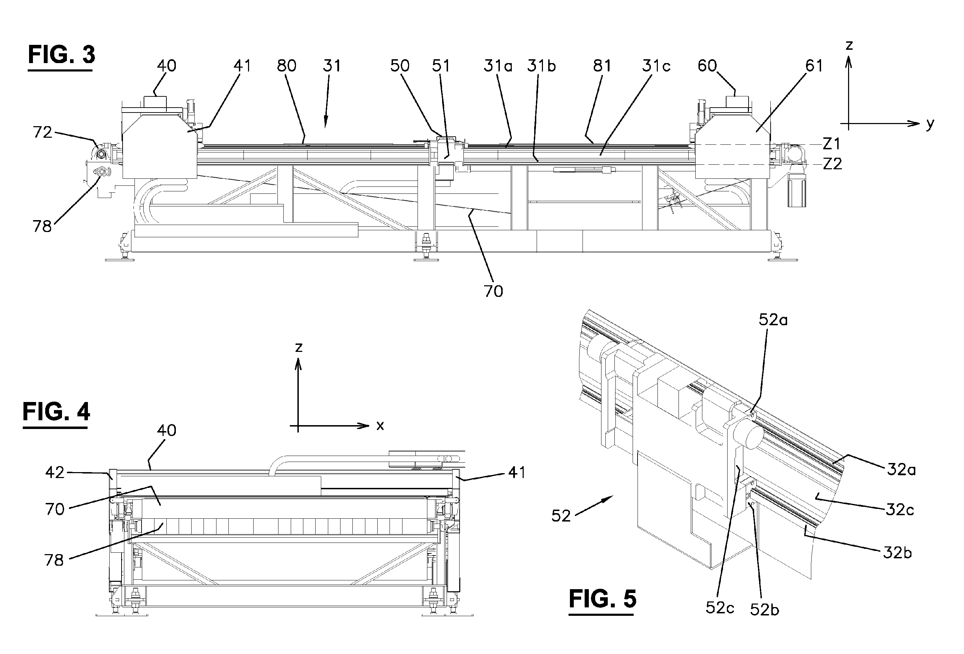

Die Führungen 31, 32 sind hier so angeordnet, dass ein Transport von Glasscheiben bzw. Teilen davon ungehindert von den Längsseiten des Bearbeitungstisches her erfolgen kann. Demnach sind die Führungen 31, 32 so angeordnet, dass sie sich in vertikaler Richtung z gesehen von einem unteren Niveau z1 zu einem oberen Niveau z2 erstrecken, wobei das untere Niveau z1 unterhalb des Unterlagenniveaus angeordnet ist, auf welchem sich die Auflagefläche für die Glasscheiben 80, 81 befindet (vgl. Fig. 3). Vorzugsweise befindet sich das obere Niveau z1 auf diesem Unterlagenniveau oder unterhalb desselben.

Die jeweilige Führungsbahn 31, 32 weist eine den Bearbeitungsstationen 10, 20 zugewandte Innenseite und eine von den Bearbeitungsstationen 10, 20 abgewandte Aussenseite auf. Hier dienen die Aussenseiten der Führungsbahnen 31, 32 als Führung für die Brücken 40, 50, 60.

Die Führungsbahnen 31, 32 sind gleich aufgebaut. Die erste Führungsbahn 31 umfasst eine obere Führungsschiene 31a und eine untere Führungsschiene 31c, die in der vertikalen Achse z versetzt zueinander angeordnet sind und sich in y-Richtung von der ersten Bearbeitungsstation 10 zur zweiten Bearbeitungsstation 20 erstrecken. Entsprechend umfasst die zweite Führungsbahn 32 eine obere Führungsschiene 32a und eine versetzt dazu angeordnete untere Führungsschiene 32c, die sich von der ersten, 10, zur zweiten Bearbeitungsstation 20 erstrecken (vgl. Fig. 5).

Die jeweilige Brücke 40, 50, 60 weist an den beiden Enden einen Schlitten 41, 42, 51, 52, 61, 62 auf, welcher entlang der Führungsbahn 31 bzw. 32 verfahrbar ist. Die Schlitten 41, 42, 51, 52, 61, 62 sind mit Führungsteilen versehen, welche mit der oberen bzw. unteren Führungsschiene 31a, 31c, 32a, 32c der Führungsbahn 31 bzw. 32 zusammenwirken.

In Fig. 5 sind die Führungsteile 52a, 52b für den Schlitten 52 zu sehen. Die Führungsteile für die anderen Schlitten 41, 42, 51, 61, 62 sind analog ausgestaltet. Die Führungsteile sind gemäss der Art der Führung ausgebildet. Beispielweise umfassen sie bei einer Wälzführung Wälzkörper, die entlang der Führungsschienen 31a, 31c, 32a, 32c abrollen können.

Der jeweilige Schlitten 41, 42, 51, 52, 61, 62 ist mit einem Antrieb versehen, um die Brücken 40, 50, 60 gesteuert zu verschieben. Die Steuerung ist dabei so ausgelegt, dass die beiden Antriebe derselben Brücke 40, 50 oder 60 im Betrieb so angesteuert werden, dass sie synchron bewegt werden.

Im vorliegenden Beispiel ist der jeweilige Antrieb als Linearmotor ausgelegt. Zu diesem Zweck umfassen der jeweilige Schlitten 41, 42, 51, 52, 61, 62 ein Primärteil, welches die elektrischen Wicklungen enthält, und die jeweilige Führungsbahn 31, 32 ein Sekundärteil, welches mit Permanentmagneten versehen ist.

In Fig. 3 ist bei der Führungsbahn 31 eine Bahn 31c aus Magneten zu sehen, die das Sekundärteil bildet und die zwischen den Führungsschienen 31a und 31b angeordnet ist. In analoger Weise ist die zweite Führungsbahn 33 mit einer zwischen den Führungsschienen 32a und 32b angeordneten Bahn 32c aus Magneten ausgestattet, vgl. Fig. 5. In dieser Fig. 5 ist auch das Primärteil 52c des Schlittens 52 zu sehen.

Durch geeignetes Speisen der Wicklungen ist ein Wanderfeld erzeugbar, das einen Schub vom Primärteil des Schlittens 41, 42, 51, 52, 61, 62 auf das Sekundärteil ausübt, so dass eine Brücke 40, 50, 60 schnell und präzise verschoben werden kann. Die Verwendung derselben Führungen 31, 32 für die Brücken 40, 50, 60 erlaubt es, dieselbe Magnetbahn 31a, 32c zum Verfahren der Brücken 40, 50, 60 einzusetzen und somit den Aufbau zu vereinfachen.

Wie Figuren 1 bis 4 weiter zeigen, weist der Bearbeitungstisch ein endloses Transportband 70 auf, welches um Trommeln 71, 72, 73 gelegt ist. Das Transportband 70 dient einerseits als Auflagefläche für die zu bearbeitenden Glasscheiben 80, 81. Andererseits ist das Transportband 70 in y-Richtung verfahrbar, um eine Glasscheibe von der ersten Bearbeitungsstation 10 zur zweiten Bearbeitungsstation 20 sowie abgebrochene Glasscherben vom Bearbeitungstisch weg zu einem anschliessenden Sammelbereich transportieren zu können.

An der jeweiligen Brücke 40 und 60 ist ein Wagen 43 bzw. 63 in der x-Achse hin und her verschiebbar angeordnet. Führung und Antrieb für die Wagen 43, 63 sind hier gleich aufgebaut wie für die Schlitten 41, 42, 51, 52, 61, 62.

Demnach ist die Brücke 60 mit einer Führungsbahn 64 versehen, die eine obere und untere Führungsschiene 64a, 64b aufweist, welche zusammen mit Führungsteilen am Wagen 63 zusammenwirken (vgl. Fig. 1). In analoger Weise weist die Brücke 40 eine Führungsbahn 44 mit zwei Führungsschienen auf, entlang welchen der Wagen 43 verschiebbar ist. Die Führung für den jeweiligen Wagen 43, 63 ist z. B. als Wälzführung ausgebildet.

Zum gesteuerten Verfahren ist der jeweilige Wagen 43, 63 mit einem Antrieb versehen, der als Linearmotor ausgelegt ist. Zu diesem Zweck umfasst der jeweilige Wagen 43, 63 ein Primärteil mit Wicklungen und die jeweilige Führungsbahn 44, 64 ein Sekundärteil, welches mit Permanentmagneten versehen ist. In Fig. 1 ist bei der Führungsbahn 64 eine Bahn 64c aus Magneten zu sehen, die das Sekundärteil bildet und die zwischen den Führungsschienen 64a und 64b angeordnet ist. In analoger Weise ist die Führungsbahn 44 für den Wagen 43 mit einer zwischen den Führungsschienen angeordneten Bahn aus Magneten ausgestattet.

Der jeweilige Wagen 43, 63 dient als Träger für ein oder mehrere Werkzeuge.

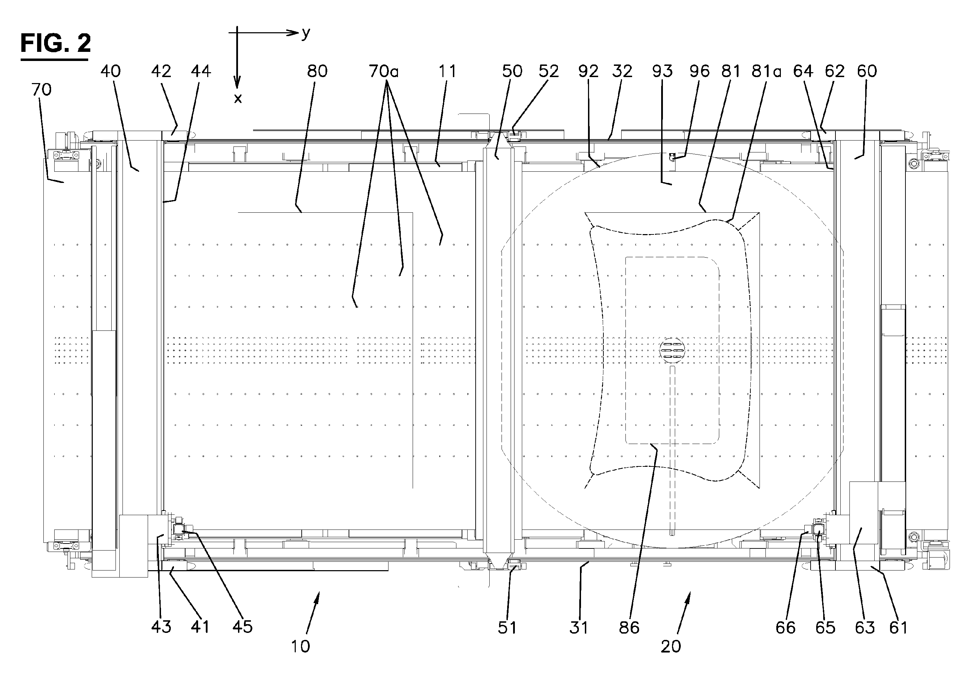

Die erste Bearbeitungsstation 10 ist hier als Schneidstation ausgelegt, bei welcher eine Glasscheibe mit Ritzlinien versehbar ist. Ein Beispiel derartiger Linien 81a sind in Fig. 2 bei der Glasscheibe 81 gestrichelt angedeutet. Die Ritzlinien können z. B. die Kontur des herauszubrechenden Glasscheibenteils definieren und/oder Hilfsritzlinien sein, die den abzubrechenden Glasscheibenrand im mehrere Teile unterteilen. Bei der ersten Bearbeitungsstation ist zur Stützung des Transportbandes 70 unterhalb desselben eine Platte 11 angeordnet.

Die zweite Bearbeitungsstation 20 ist hier als Schneid- und Brechstation ausgelegt, bei welcher eine Glasscheibe bei Bedarf mit Ritzlinien versehbar ist und Glasscheibenteile abgebrochen werden können.

Demnach sind an dem Wagen 43 ein Schneidwerkzeug 45 und am Wagen 63 ein Schneidwerkzeug 65 sowie ein Brechwerkzeug 66 angeordnet. Das jeweilige Schneidwerkzeug 45, 65 enthält z. B. ein Schneidrad, welches in der vertikalen z-Achse verschiebbar und um diese drehbar ist, um es auf eine Glasscheibe aufsetzen und mit Ritzlinien beliebiger Form versehen zu können.

Das Brechwerkzeug 66 ist so ausgelegt, dass auf den abzubrechenden Teil einer geritzten Glasscheibe eine Kraft ausübbar ist. Beispielsweise umfasst das Brechwerkzeug 66 eine Kugel, die in der vertikalen z-Achse verschiebbar und in allen Richtungen drehbar gelagert ist. Anstelle einer Kugel ist auch ein anderer Brechkörper denkbar, z. B. eine oder mehrere Rollen.

Als feste Gegenfläche beim Brechen ist z. B. eine Schablone einsetzbar, welche der gewünschten Scheibenform entspricht. In Figuren 1 und 2 ist ein Beispiel einer Schablone 86 gestrichelt angedeutet.

Es ist jedoch auch eine Ausgestaltung für ein schablonenloses Brechen denkbar, wie dies z. B. in der EP 1 647 534 A1 der gleichen Anmelderin beschrieben ist. Zu diesem Zweck ist mindestens ein unterer Brechkörper vorgesehen, welcher verfahrbar unterhalb des Transportbandes 70 angeordnet ist und als feste Gegenfläche dient, wenn das Brechwerkzeug 66 von oben auf die Glasscheibe wirkt. Der untere Brechkörper ist z. B. kugel- oder rollenförmig ausgebildet. Im vorliegenden Ausführungsbeispiel ist in den Figuren 1 und 2 eine um die z-Achse drehbare Platte 92 angedeutet, welche unterhalb des Transportbandes 70 angeordnet ist und welche einen sich in radialer Richtung erstreckenden Schlitz 93 aufweist. Entlang des Schlitzes 93 ist ein unterhalb des Transportbandes 70 angeordneter Brechkörper 96 verfahrbar. Durch Drehen der Platte 92 und Verfahren des Brechkörpers 96 kann dieser bei der Bearbeitungsstation 20 an beliebigen Punkten in der xy-Ebene positioniert werden.

Das Transportband 70 ist aus einem flexiblen Material gefertigt, das so gewählt ist, dass es einerseits ohne grösseres Durchhängen das Gewicht einer Glasscheibe 80, 81 zu tragen vermag und andererseits beim Brechvorgang, bei welchem Druck auf die Glasscheibenoberfläche ausgeübt wird, genügend nachgibt. Geeignete Materialien für das Transportband 70 sind z. B. Kunststoff mit ausgewählter Elastizität oder ein Gewebeband, insbesondere ein Gewebeband aus Kunststofffasern.

Die Trommeln 71 und 72 sind jeweils endseitig des Bearbeitungstisches angeordnet, wobei die eine Trommel 71 antreibbar ist und die andere Trommel 72 so gelagert ist, dass das Transportband 70 die nötige Spannung aufweist. Die Trommel 73 befindet sich unterhalb des Niveaus, auf welchem die Glasscheiben bearbeitet werden und dient zum Ausrichten des Bandlaufes. Dazu ist die Trommel 73 so gelagert, dass das eine Ende vor und zurück bewegbar ist und im Betrieb entsprechend unerwünschte Bewegungen des Transportbandes 70 von der y-Richtung weg korrigiert werden. Insgesamt ist dadurch gewährleistet, dass bei einem Verfahren des Transportbandes 70 eine darauf aufliegende Glasscheibe präzise in der y-Richtung von der ersten, 10, zur zweiten Bearbeitungsstation 20 verschoben wird und somit dort ein Neupositionieren nicht zwingendermassen erforderlich ist.

Die Brücke 50, welche zwischen den Brücken 40 und 60 angeordnet ist, dient unterstützend beim Transport einer Glasscheibe von der ersten Bearbeitungsstation 10 zur zweiten Bearbeitungsstation 20. Die Brücke 50 umfasst mindestens ein Aufsetzelement, welches in der z-Achse verschiebbar und beim Transport auf die Glasscheibe aufsetzbar ist, um so diese zu fixieren und eine Relativverschiebung zwischen Glasscheibe und Transportband 70 zu vermeiden. Als Aufsetzelement ist z. B. ein Sauger geeignet.

Zum Festhalten einer Glasscheibe 80, 81 bei der Bearbeitungsstation 10, 20 ist das Transportband 70 im vorliegenden Ausführungsbeispiel gelocht ausgebildet, um durch Erzeugen eines Unterdruckes die Glasscheibe 10, 20 anzusaugen und dadurch beim Schneiden und/oder Brechen unverrückbar auf dem Transportband 70 festzuhalten. In den Figuren 1 und 2 ist die Lochung 70a im Transportband 70 durch eine Vielzahl Punkte angedeutet, die hier in Reihen angeordnet sind.

In den Figuren 1 und 4 ist weiter eine umlaufende Bandbürste 78 zu sehen, welche in Kontakt mit dem Transportband 70 steht und unterhalb der Trommel 72 angeordnet ist. Im Betrieb bewegt sich das Transportband 70 über die Bandbürste 78 hinweg, so dass etwaige noch vorhandene Glasscherben und/oder anderes Material abgestreift werden und die Oberseite des Transportbandes 70 eine möglichst saubere Unterlage bildet für die nächste zu bearbeitende Glasscheibe.

Ein möglicher Betrieb des Bearbeitungstisches ist wie folgt:
Die rohe Glasscheibe 80 wird mittels (nicht dargestellten) Fördermitteln auf das Transportband 70 bei der ersten Bearbeitungsstation 10 gelegt. Vor dem Auflegen wird mittels einer (nicht dargestellten) Sensoreinrichtung die Position der Glasscheibe erfasst. Brücke 40 und Werkzeug 45 werden so angesteuert, dass die Glasscheibe 80 gemäss Vorgabe geritzt wird. Die Brücke 50 wird zur Glasscheibe 80 bewegt, um diese auf dem Transportband 70 zu fixieren. Die Brücke 50 und das Transportband 70 zusammen mit der Glasscheibe 80 werden in der y-Richtung zur zweiten Bearbeitungsstation 20 verfahren.

Die Brücke 50 wird zurück in die Warteposition verfahren. Brücke 60 und Werkzeuge 65, 66 werden so angesteuert, dass die Glasscheibe 80, falls erforderlich, weiter geritzt und das Nutzteil der Glasscheibe herausgebrochen wird. Dieses wird mittels (nicht dargestellten) Fördermitteln abtransportiert, während die abgebrochenen Teile auf dem Transportband 70 liegen blieben. Während der Bearbeitung der Glasscheibe 80 bei der zweiten Station 20 kann bereits die nächste Glasscheibe auf der ersten Bearbeitungsstation 10 aufgelegt und bearbeitet werden. Ist der jeweilige Bearbeitungsprozess an den Bearbeitungsstationen 10 und 20 beendet, werden Transportband 70 und Brücke 50 bewegt, so dass die Glasscheibe von der ersten, 10, zur zweiten Bearbeitungsstation 20 verschoben wird und gleichzeitig die Glasscherben von der zweiten Bearbeitungsstation 20 über die das Ende des Bearbeitungstisches bei der Trommel 71 hinbewegt werden und in einen Auffangbehälter fallen.

Der Bearbeitungstisch ist vielseitig einsetzbar, um Glasscheiben zu bearbeiten, insbesondere um Scheiben mit der gewünschten Form herzustellen, wie sie für den Automobilbereich verwendet werden.

Die Bearbeitungsstationen können auch anders ausgestaltet sein, z. B. nur zum Schneiden oder nur zum Brechen. Der Bearbeitungstisch kann bei Bedarf auch mehr als zwei Bearbeitungsstationen aufweisen.

## Patentansprüche

1. Bearbeitungstisch zum Bearbeiten von Glasscheiben (80, 81), mit einer ersten Bearbeitungsstation (10), einer ersten verfahrbaren Brücke (40), an welcher mindestens ein Werkzeug (45) angeordnet ist zur Bearbeitung einer Glasscheibe an der ersten Bearbeitungsstation, einer zweiten Bearbeitungsstation (20) und einer zweiten verfahrbaren Brücke (60), an welcher mindestens ein Werkzeug (65, 66) angeordnet ist zur Bearbeitung einer Glasscheibe an der zweiten Bearbeitungsstation, **gekennzeichnet durch** eine dritte verfahrbare Brücke (50), welche zwischen der ersten und zweiten Brücke (40, 60) angeordnet ist und welche zum Transport einer Glasscheibe (80, 81) von der ersten zur zweiten Bearbeitungsstation dient, und **durch** Führungen (31, 32), welche sich von der ersten zur zweiten Bearbeitungsstation (10, 20) erstrecken und entlang welchen die Brücken (40, 50, 60) verfahrbar sind.

2. Bearbeitungstisch nach Anspruch 1, wobei das jeweilige Werkzeug (45, 65, 66) zum Ritzen und/oder Brechen von Glasscheiben (80, 81) ausgelegt ist, wobei vorzugsweise Glasscheiben bei der ersten Bearbeitungsstation (10) geritzt und bei der zweiten Bearbeitungsstation (20) geritzt und gebrochen werden können.

3. Bearbeitungstisch nach einem der vorangehenden Ansprüche, bei welchem sich die Führungen (31, 32) in vertikaler Richtung (z) gesehen von einem unteren Niveau (zl) zu einem oberen Niveau (z2) erstrecken, wobei das untere Niveau unterhalb des Unterlagenniveaus angeordnet ist, auf welchem sich die Unterlage (70) für die Glasscheiben (80, 81) befindet, vorzugsweise befindet sich das obere Niveau höchstens auf dem Unterlagenniveau.

4. Bearbeitungstisch nach einem der vorangehenden Ansprüche, bei welchem die Führungen eine erste Führungsbahn (31) und eine zweite Führungsbahn (32) umfassen, welche entlang der beiden Längsseiten des Bearbeitungstisches verlaufen, wobei die jeweilige Führungsbahn eine den Bearbeitungsstationen (10, 20) zugewandte Innenseite und eine von den Bearbeitungsstationen abgewandte Aussenseite aufweist, wobei vorzugsweise die Brücken (40, 50, 60) entlang der Aussenseiten der Führungsbahnen verfahrbar sind.

5. Bearbeitungstisch nach einem der vorangehenden Ansprüche, mit Linearmotoren (31c, 32c, 52c) als Antrieb für die Brücken (40, 50, 60).

6. Bearbeitungstisch nach einem der vorangehenden Ansprüche, wobei die jeweilige Führung (31, 32) eine Magnetbahn (31c, 32c) enthält, welche vorzugsweise zwischen zwei Führungsschienen (31a, 31b, 32a, 32b) verläuft.

7. Bearbeitungstisch nach einem der vorangehenden Ansprüche, wobei die dritte Brücke (50) mindestens ein Aufsetzteil, insbesondere einen Sauger, aufweist zum Aufsetzen auf einer Glasscheibe (80, 81).

8. Bearbeitungstisch nach einem der vorangehenden Ansprüche, wobei zumindest an einer der Brücken (40, 60) ein Schneidwerkzeug (45, 65) zum Ritzen einer Glasscheibe (80, 81), ein Brechwerkzeug (66) zum Brechen einer Glasscheibe oder beides angeordnet ist bzw. sind.

9. Bearbeitungstisch nach einem der vorangehenden Ansprüche, wobei an der ersten Brücke (40) ein Schneidwerkzeug (45) zum Ritzen einer Glasscheibe (80, 81) bei der ersten Bearbeitungsstation (10) angeordnet ist und wobei an der zweiten Brücke (60) ein weiteres Schneidwerkzeug (65) zum Ritzen und/oder ein Brechwerkzeug (66) zum Brechen einer Glasscheibe (80, 81) bei der zweiten Bearbeitungsstation (10) angeordnet ist.

10. Bearbeitungstisch nach einem der vorangehenden Ansprüche, mit einem Transportband (70) als Auflage für die Glasscheiben (80, 81) und zum Transport einer Glasscheibe von der ersten (10) zur zweiten Bearbeitungsstation (20), vorzugsweise ist das Transportband endlos ausgebildet.

11. Bearbeitungstisch nach Anspruch 10, wobei das Transportband um Trommeln (71, 72, 73) gelegt ist und eine der Trommeln (73) so gelagert ist, dass abweichende Bewegungen des Transportbandes (70) von der Transportrichtung (y) weg korrigierbar sind, vorzuweise ist das eine Ende dieser Trommel (73) vor und zurück verschiebbar gelagert.

12. Bearbeitungstisch nach einem der vorangehenden Ansprüche, wobei bei der zweiten Bearbeitungsstation (20) zumindest ein Brechkörper (96) unterhalb der Unterlage (70) verfahrbar angeordnet ist, auf welcher eine Glasscheibe (81) bei der Bearbeitung aufliegt, vorzugsweise dient ein flexibles Transportband (70) als Unterlage.

13. Bearbeitungstisch nach Anspruch 12, wobei bei der zweiten Bearbeitungsstation (20) unterhalb der Unterlage (70) eine drehbare Platte (92) angeordnet ist, die einen Schlitz (93) aufweist, entlang welchem der Brechkörper (96) verfahrbar ist.

14. Verfahren zum Bearbeiten von Glasscheiben, bei welchem ein Bearbeitungstisch nach einem der vorangehenden Ansprüche verwendet wird.

15. Verfahren nach Anspruch 14, wobei bei der ersten Bearbeitungsstation (10) eine Glasscheibe (80, 81) mittels des mindestens einen Werkzeugs (45) an der ersten Brücke (40) bearbeitet wird, mittels der dritten Brücke (50) von der ersten zur zweiten Bearbeitungsstation (20) transportiert wird, wobei vorzugsweise die Glasscheibe während des Transports auf einer verfahrbaren Unterlage (70) aufliegt, und die Glasscheibe bei der zweiten Bearbeitungsstation (20) mittels des mindestens einen Werkzeugs (65) an der zweiten Brücke (60) bearbeitet wird.
